# EUROPÄISCHE PATENTANMELDUNG

(11) **EP 2 546 957 A2**
(43) Veröffentlichungstag der Anmeldung: **16.01.2013**
(21) Anmeldenummer: 12004607.3
(22) Anmeldetag: 20.06.2012
(51) Int. Cl.: H02K 1/14

(54) **Statorsegment und Stator sowie Verfahren zur Herstellung eines Statorsegments**

(30) Priorität: 12.07.2011 DE 102011107140
(71) Anmelder: Robert Bosch GmbH, 70469 Stuttgart (DE)
(72) Erfinder: Hack, Arno, 97776 Eussenheim-Aschfeld (DE); Bodner, Rudolf, 97854 Steinfeld (DE)
(74) Vertreter: Thürer, Andreas

(57) **Zusammenfassung**

Die vorliegende Erfindung bezieht sich auf ein Statorsegment (110) für eine elektrische Maschine, wobei das Statorsegment (110) einen ersten Stapel (100) mit einer ersten Bodenfläche und einer ersten Deckfläche aufweist, der aus einer ersten Anzahl von in einer Stapelrichtung aufeinandergestapelten Blechen gebildet ist. Das Statorsegment (110) weist einen zweiten Stapel (102), mit einer zweiten Bodenfläche und einer zweiten Deckfläche auf, der aus einer zweiten Anzahl von in der Stapelrichtung aufeinandergestapelten Blechen gebildet ist. Die zweite Bodenfläche liegt an der ersten Deckfläche des ersten Stapels (100) an und ist mit der ersten Deckfläche des ersten Stapels (100) verklebt.

## Beschreibung

Die vorliegende Erfindung bezieht sich auf ein Statorsegment für eine elektrische Maschine, auf einen Stator für eine elektrische Maschine sowie auf ein Verfahren zur Herstellung eines Statorsegments für eine elektrische Maschine.

Ein herkömmlicher Stator für einen Elektromotor ist aus aufeinander gestapelten Blechen aufgebaut, die gegeneinander elektrisch isoliert und mechanisch miteinander verbunden sind.

Die WO 00/49701 beschreibt eine elektrische Maschine mit einer Einzelpolwicklung, die im Wesentlichen aus zwei Körpern aufgebaut ist. Zumindest einer dieser Körper ist aus einer wenigstens der Anzahl der Pole der elektrischen Maschine entsprechenden Anzahl von Segmenten aufgebaut.

Es ist die Aufgabe der vorliegenden Erfindung, ein verbessertes Statorsegment für eine elektrische Maschine, einen verbesserten Stator für eine elektrische Maschine sowie ein verbessertes Verfahren zur Herstellung eines Statorsegments für eine elektrische Maschine zur Verfügung zu stellen.

Diese Aufgabe wird durch ein Statorsegment für eine elektrische Maschine, einen Stator für eine elektrische Maschine sowie ein Verfahren zur Herstellung eines Statorsegments für eine elektrische Maschine gemäß den Hauptansprüchen gelöst.

Der vorliegenden Erfindung liegt die Erkenntnis zu Grunde, dass durch ein Verbinden von vorfertigbaren Blechstapeln zu einem Statorsegment auch relativ lange Statorsegmente erreichbar sind. Stehen Blechstapel unterschiedlicher Längen zur Verfügung, so lassen sich durch eine geeignete Kombination der Blechstapel Statorsegmente mit einer Vielzahl unterschiedlicher Längen realisieren. Durch eine geeignete Verbindungstechnik der Blechstapel können die mechanischen Eigenschaften der vorgefertigten Blechstapel, wie beispielsweise Stabilität und Maßhaltigkeit, für das Statorsegment erhalten werden.

Vorteilhafterweise können so schlanke Statorsegmente ohne Einbußen bei Standfestigkeit und Fertigungsgenauigkeit mit Baulängen länger als beispielsweise 140 mm hergestellt werden. Form- und Lagetoleranzen am Stator können so eingehalten werden. Eine Fertigung kann wirtschaftlicher gestaltet werden, da mehrere Statorvarianten aus den vorgefertigten Blechstapeln mit einer einheitlichen Fertigungstechnologie kombiniert werden können. Durch eine Verwendung einer Klebeverbindung können die Blechstapel ohne thermische und/oder mechanische Spannungen verbunden werden und es kann eine hohe Packungsdichte der Bleche erreicht werden.

Die vorliegende Erfindung schafft ein Statorsegment für eine elektrische Maschine, wobei das Statorsegment die folgenden Merkmale aufweist:
einen ersten Stapel, mit einer ersten Bodenfläche und einer ersten Deckfläche, wobei der erste Stapel aus einer ersten Anzahl von in einer Stapelrichtung aufeinandergestapelten Blechen gebildet ist; und
einen zweiten Stapel, mit einer zweiten Bodenfläche und einer zweiten Deckfläche, wobei der zweite Stapel aus einer zweiten Anzahl von in der Stapelrichtung aufeinandergestapelten Blechen gebildet ist, und wobei die zweite Bodenfläche an der ersten Deckfläche anliegt und mit der ersten Deckfläche verklebt ist.

Unter einem Statorsegment kann ein magnetisierbarer Spulenkern für eine Einzelspule verstanden werden. Beispielsweise kann das Statorsegment ein Eisenkern sein. Eine elektrische Maschine kann ein Elektromotor, beispielsweise ein Servo-Antrieb, sein. Dabei kann der Elektromotor ein rotatorischer Motor oder ein linearer Motor sein. Die elektrische Maschine kann auch ein Generator sein. Ein Stapel kann aus flachseitig aneinander anliegenden Blechen bestehen und somit einen schichtweise aufgebauten Körper darstellen. Die Bleche können von gleicher Größe und Form sein und deckungsgleich aufeinandergestapelt sein. Die Bleche können beschichtet sein. Die Bleche können gegeneinander elektrisch isoliert sein. Die Bleche können ein ferromagnetisches, also magnetisierbares Material wie beispielsweise Eisen umfassen. Eine Bodenfläche und eine Deckfläche können außenliegende Flachseiten der äußersten Bleche eines Stapels sein. Die Anzahl der Bleche in den Stapeln kann gleich oder verschieden sein. Die Bleche des ersten Stapels können gleich den Blechen des zweiten Stapels sein. Die Stapelrichtung kann einer Längserstreckungsrichtung des Stapelsegments entsprechen. Die Bodenfläche und die Deckfläche können normal zu der Stapelrichtung ausgerichtet sein. Aneinandergrenzende Boden- und Deckflächen der zwei Stapel können einander in Bezug auf Form und Größe entsprechen. Auf diese Weise können die Stapel versatzfrei miteinander verbunden werden. Die Stapel können vorgefertigt werden und anschließend miteinander verklebt werden. Dabei entsteht eine stoffschlüssige Klebeverbindung zwischen den benachbart angeordneten Stapeln. Durch das Verkleben der Stapel können bisherige technologische Grenzen erweitert beziehungsweise aufgehoben werden. Insbesondere können die Stapel ohne Einsatz einer mechanischen Verbindung, wie sie beispielsweise für die Verbindung der Bleche innerhalb eines Stapels eingesetzt wird, miteinander verbunden werden. Lange Statorsegmente lassen sich kostengünstig mit hoher Prozesssicherheit ohne erhöhten Montageaufwand herstellen. Die Klebeverbindung kann eine hohe thermische und mechanische Sicherheit aufweisen. Wirtschaftliche Vorteile sind durch ein einheitliches Fertigungskonzept basierend auf einer Variantenreduzierung mittels standardisierter Elemente möglich.

Die Bleche des ersten Stapels sowie die Bleche des zweiten Stapels können mechanisch miteinander verbunden sein. Unter einer mechanischen Verbindung kann beispielsweise eine Stanzfügeverbindung, wie eine Clinchverbindung oder ein Stanzpaktieren oder eine Verbindung mittels eines Verbindungselements verstanden werden. Durch die mechanische Verbindung können die Bleche der Stapel einfach und sicher miteinander verbunden werden. Die Stapel können so handhabungssicher sein und leicht für den Zusammenbau des Statorsegments vorbereitet werden. Die Stapel können ebenso durch Kunststoffumspritzen vorab verbunden werden, um Einzelteile als kunststoffumspritzte Segmente bereitzustellen. Die Bleche können Backlackbleche sein.

Ferner können die Bleche des ersten Stapels und die Bleche des zweiten Stapels in der Stapelrichtung deckungsgleich aneinander ausgerichtet sein. Unter deckungsgleich kann verstanden werden, dass Konturen der Bleche übereinstimmen und in Stapelrichtung aufeinander folgend angeordnet sind. Durch deckungsgleiche Anordnung der Bleche können im Betrieb Wirbelströme und thermische Belastungen der Bleche verringert werden. Dadurch kann eine Gesamteffizienz der elektrischen Maschine verbessert werden.

Die Bleche können eine Doppel-T Kontur mit einem Fußbereich, einem Schaftbereich und einem Kopfbereich aufweisen, wobei der Fußbereich den Schaftbereich weiter überragt, als der Kopfbereich. Der Kopfbereich und der Fußbereich sind somit breiter als der Schaftbereich. Unter einem Fußbereich kann ein Teilbereich eines Blechs verstanden werden, der dazu ausgebildet ist, mit zumindest einem weiteren Fußbereich zumindest eines benachbart anzuordnenden Blechs zumindest eines weiteren Statorsegments verbunden zu werden. Unter einem Schaftbereich kann ein Teilbereich des Blechs verstanden werden, der dazu ausgebildet ist, im Inneren zumindest einer Wicklung zumindest einer Spule angeordnet zu werden, um im Betrieb ein magnetisches Feld der zumindest einen Spule zu verstärken. Unter einem Kopfbereich kann ein Teilbereich des Blechs verstanden werden, der dazu ausgebildet ist, die zumindest eine Spule zu begrenzen. Der Kopfbereich kann korrespondierend zu einer Gestalt eines Rotors der elektrischen Maschine gestaltet sein.

Das Statorsegment kann zumindest teilweise von einem wärmeleitfähigen Isolierstoff überzogen und alternativ oder ergänzend von einem wärmeleitfähigen Isolierstoff durchdrungen sein, der dazu ausgebildet ist, die Bleche elektrisch zu isolieren. Durch einen wärmeleitfähigen Isolierstoff kann im Betrieb anfallende Verlustwärme in das Statorsegment einfließen und von dem Statorsegment zu einer Wärmesenke abgeführt werden. Dabei kann der wärmeleitfähige Isolierstoff einen elektrischen Kurzschluss zwischen Spule und Statorsegment unterbinden.

Die erste Anzahl Bleche kann von der zweiten Anzahl Bleche unterschiedlich sein. Demnach kann der erste Stapel in Stapelrichtung eine andere Länge als der zweite Stapel aufweisen. Indem Stapel mit jeweils geeigneter Länge ausgewählt und miteinander verklebt werden, kann das Statorsegment im Rahmen der Kombinationsmöglichkeiten der Stapel in einer gewünschten Länge hergestellt werden.

Ferner kann das Statorsegment zumindest einen weiteren Stapel aufweisen, der eine weitere Bodenfläche und eine weitere Deckfläche aufweist, und aus einer weiteren Anzahl von in der Stapelrichtung aufeinandergestapelten Blechen gebildet ist. Dabei kann die weitere Bodenfläche an der zweiten Deckfläche des zweiten Stapels anliegen und mit der zweiten Deckfläche des zweiten Stapels verklebt sein. Je nach angestrebter Länge des Statorsegments und Längen der einzelnen Stapel kann eine geeignete Anzahl von Stapeln in einer Reihe angeordnet und an den Berührungsflächen verklebt werden. Dadurch können Statorsegmente in unterschiedlichen Längen hergestellt werden. Insbesondere kann ein Statorsegment hergestellt werden, dass eine Länge von mehr als 140 mm aufweist.

Ferner schafft die vorliegende Erfindung einen Stator für eine elektrische Maschine, mit einer Mehrzahl von Statorsegmenten gemäß dem hier vorgestellten Ansatz. Die Statorsegmente der Mehrzahl von Statorsegmenten sind benachbart zueinander angeordnet und miteinander verbunden.

Beispielsweise können die Statorsegmente so angeordnet werden, dass sie einen kreisförmigen Stator bilden, der von einem Rotor der elektrischen Maschine umschlossen werden kann.

Weiterhin schafft die vorliegende Erfindung ein Verfahren zur Herstellung eines Statorsegments für eine elektrische Maschine, wobei das Verfahren die folgenden Schritte umfasst:
Bereitstellen eines Stapels, mit einer Bodenfläche und einer Deckfläche, wobei der Stapel aus einer Anzahl von in einer Stapelrichtung aufeinandergestapelten Blechen gebildet ist;
Bereitstellen zumindest eines weiteren Stapels, mit einer weiteren Bodenfläche und einer weiteren Deckfläche, wobei der weitere Stapel aus einer weiteren Anzahl von in einer Stapelrichtung aufeinandergestapelten Blechen gebildet ist;
Anordnen der weiteren Bodenfläche des zumindest einen weiteren Stapels an der Deckfläche des Stapels; und
Verbinden der weiteren Bodenfläche des zumindest einen weiteren Stapels mit der Deckfläche des Stapels.

Im Schritt des Verbindens kann die weitere Bodenfläche des zumindest einen weiteren Stapels mit der Deckfläche des Stapels verklebt werden. Unter Verkleben kann ein adhäsiv-kohäsiver Prozess verstanden werden, bei dem ein Klebstoff mit zwei aneinander angrenzenden Blechflächen zweier Stapel eine chemische und/oder physikalische Verbindung eingeht, um die Blechflächen und damit auch die Stapel miteinander zu verbinden. Dabei kann der Klebstoff elektrisch isolierende Eigenschaften, sowie thermisch leitende Eigenschaften aufweisen. Insbesondere kann ein reaktiver Klebstoff Verwendung finden. Die Verbindung zweier Stapel kann ausschließlich über die Klebeverbindung realisiert sein.

Die Erfindung wird nachstehend anhand der beigefügten Zeichnungen beispielhaft näher erläutert. Es zeigen:
- Fig. 1 a: Darstellungen eines ersten Stapels und eines zweiten Stapels gemäß einem Ausführungsbeispiel der Erfindung;
- Fig. 1b: eine Darstellung eines Statorsegments gemäß einem Ausführungsbeispiel der Erfindung;
- Fig. 2: eine Darstellung eines Statorsegments gemäß einem Ausführungsbeispiel der Erfindung in einer Montagevorrichtung;
- Fig. 3: einen Querschnitt eines Ausschnitts eines Stators gemäß einem Ausführungsbeispiel der Erfindung; und
- Fig. 4: ein Ablaufdiagramm eines Verfahrens zum Herstellen eines Statorsegments gemäß einem Ausführungsbeispiel der Erfindung.

Gleiche oder ähnliche Elemente können in den nachfolgenden Figuren durch gleiche oder ähnliche Bezugszeichen versehen sein.

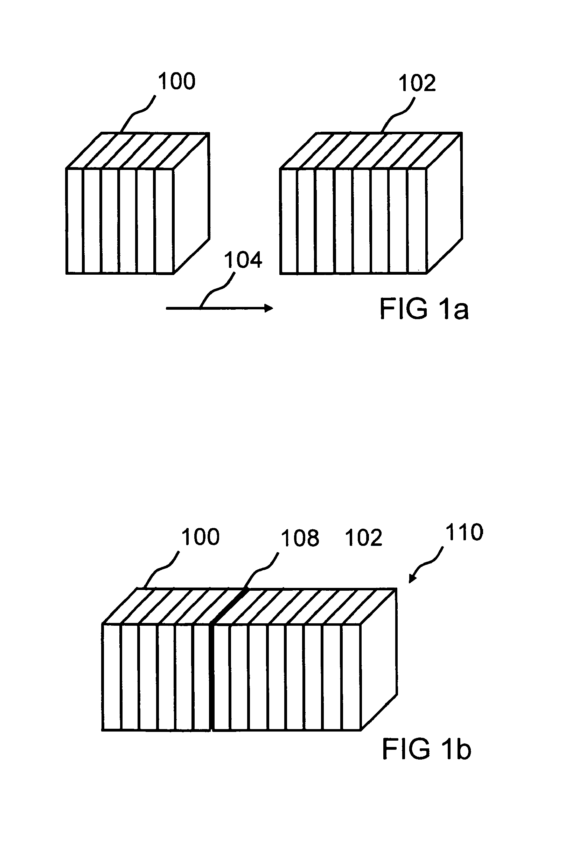

Fig. 1a zeigt eine schematische Darstellung eines ersten Stapels 100 und eines zweiten Stapels 102 gemäß einem Ausführungsbeispiel der Erfindung. Die Stapel 100, 102 können zu einem Statorsegment verbunden werden, wie es in Fig. 1b gezeigt ist.

Der erste Stapel 100 weist eine Anzahl von Blechen auf, hier beispielsweise sechs gleiche Bleche, die zwischen gegenüberliegenden Grundflächen des ersten Stapels 100 in einer Stapelrichtung 104 aufeinandergestapelt sind. Die Bleche sind deckungsgleich aneinander ausgerichtet und mechanisch miteinander verbunden.

Der zweite Stapel 102 weist eine weitere Anzahl von Blechen auf, hier beispielsweise acht gleiche Bleche, die zwischen gegenüberliegenden Grundflächen des zweiten Stapels 102 in der Stapelrichtung 104 aufeinandergestapelt sind. Die Bleche sind deckungsgleich aneinander ausgerichtet und mechanisch miteinander verbunden.

Aufgrund der unterschiedlichen Anzahl der Bleche weist der zweite Stapel 102 eine größere Länge als der erste Stapel 100 auf. Die Bleche des ersten Stapels 100 sind dabei identisch zu den Blechen des zweiten Stapels 102. Alternativ können sich die Bleche der Stapel 100, 102 voneinander unterscheiden, beispielsweise unterschiedliche Dicken aufweisen. Alternativ können die Stapel 100, 102 die gleiche Anzahl von Blechen aufweisen. Die Anzahl der Bleche pro Stapel 100, 102 ist lediglich beispielhaft gewählt. Ein Stapel 100, 102 kann auch aus erheblich mehr Blechen aufgebaut sein, beispielsweise aus 50 bis 300 Blechen.

Um das Statorsegment herzustellen, werden einander zugewandte Grundflächen der Stapel 100, 102 miteinander verklebt. Gemäß diesem Ausführungsbeispiel wird eine Bodenfläche des ersten Stapels 100 mit einer in Fig. 1a verdeckt dargestellten Deckfläche des zweiten Stapels 102 verklebt.

Fig. 1b zeigt eine schematische Darstellung eines verklebten Statorsegments 110 gemäß einem Ausführungsbeispiel der vorliegenden Erfindung. Das Statorsegment 110 kann als Kern einer elektrischen Spule eingesetzt werden. Bei einem Elektromotor kann das Statorsegment 110 Teil eines Stators des Elektromotors sein.

Das Statorsegment 110 ist aus den in Fig. 1a gezeigten Stapeln 100, 102 zusammengesetzt. Das Statorsegment 110 weist eine Klebefuge 108 auf, an der der erste Stapel 100 mit dem zweiten Stapel 102 zusammengeklebt ist. Das Statorsegment 110 weist eine Länge auf, die sich aus einer Addition der Längen der Stapel 100, 102 ergibt. Durch das Hinzufügen weiterer Stapel kann die Länge des Statorsegments 110 weiter verlängert werden. Das Statorsegment 110 weist plane Seitenflächen auf.

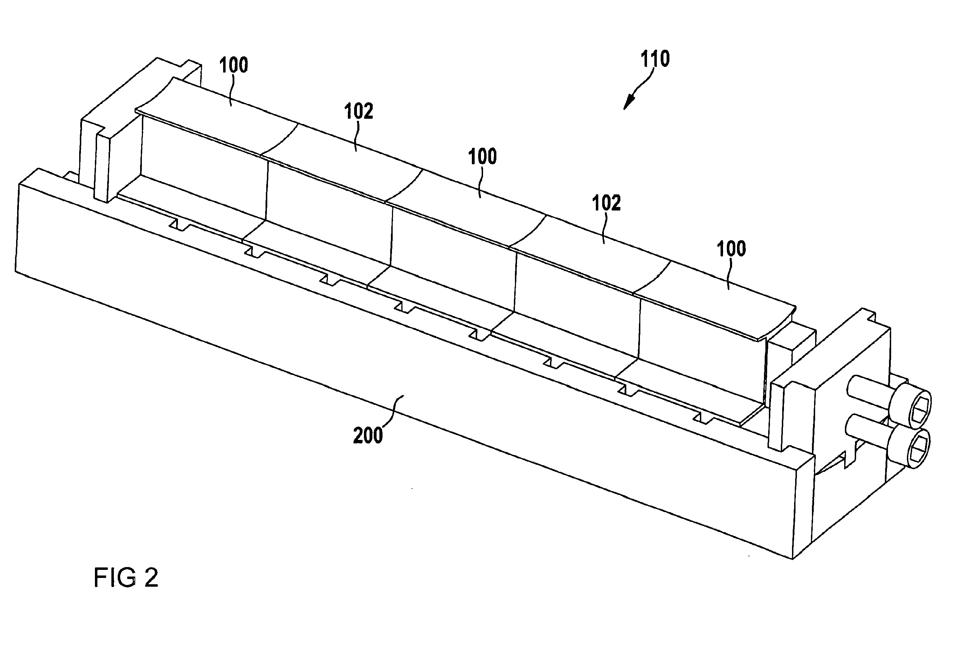

Fig. 2 zeigt eine Darstellung eines Statorsegments 110 gemäß einem Ausführungsbeispiel der vorliegenden Erfindung. Das Statorsegment 110 ist in einer Fertigungsvorrichtung 200 eingespannt. Das Statorsegment 110 ist aus fünf Stapeln 100, 102 aus Blechen zusammengeklebt. Dabei kann es sich um die anhand von Fig. 1a schematisch dargestellten Stapel 100, 102 handeln, d.h. die drei Stapel 100 können eine sich von den zwei Stapeln 102 unterscheidende Anzahl von Blechen aufweisen.

Alternativ können andere Stapel 100, 102 eingesetzt werden. Beispielsweise können die Stapel 100, 102 auch identisch sein und somit jeweils die gleiche Länge aufweisen.

Um die Stapel 100, 102 beim Verkleben axial zusammenzupressen liegt das Statorsegment 110 mit einer ersten Grundfläche des ersten Stapels 100, hier links außen, und einer fünften Deckfläche des fünften Stapels 100, hier rechts außen, an Druckstücken der Fertigungsvorrichtung 200 an. Die Druckstücke werden mittels Schrauben gegen das Statorsegment 110 gedrückt. Um ein seitliches Ausweichen zu unterbinden liegt das Statorsegment seitlich an einer Führungsfläche der Fertigungsvorrichtung 200 an. Die Fertigungsvorrichtung 200 ist dazu ausgebildet über regelmäßig angeordnete Nuten einen Abstand zwischen den Druckstücken auf unterschiedliche Produktionslängen des Statorsegments anzupassen.

Die einzelnen Blechlagen weisen als Kontur einen Querschnitt des Stators auf. Jedes einzelne Blech der Stapel 100, 102 hat eine Doppel-T-förmige Kontur. Ein Kopfbereich ist in diesem Ausführungsbeispiel dazu ausgebildet, einen Luftspalt zwischen dem Statorsegment 110 und einem innenlaufenden Rotor einer elektrischen Maschine klein zu gestalten. Dazu ist der Kopfbereich konkav ausgeführt. Für einen Linearmotor kann der Kopfbereich auch eben gestaltet sein. Ein Fußbereich ist in diesem Ausführungsbeispiel dazu ausgebildet, mit einem benachbart anzuordnenden weiteren Statorsegment verbunden zu werden und einen magnetischen Rückschluss zu dem weiteren Statorsegment zu ermöglichen.

Die einzelnen Statorbleche können eine Dicke von beispielsweise d=0,5mm aufweisen. Die Bleche eines Stapels 100, 102 sind mittels Stanzpaktierung, oder Stanzkleben zu den Stapeln 100, 102 oder Segmenten zusammengefügt. Dabei kann jeder Stapel 100, 102 eine Baulänge von bis zu 140 mm aufweisen. Jeder Stapel 100, 102 kann somit bis zu 280 Bleche aufweisen. Baulängen einzelner Stapel darüber hinaus weisen aufgrund der Federwirkung der einzelnen Bleche nicht die geforderten Stabilitätstoleranzen auf. Deshalb werden die mit Standarttechnolgie gefertigten Stapel 100, 102 modulartig zusammengesetzt.

Gemäß einem Ausführungsbeispiel ist ein Statorsegment 110 aus vier Stapelmodulen zusammengesetzt. Beispielsweise wird ein Modul A von 60 mm Länge plus ein Modul B plus ein Modul C plus ein Modul D zu einem Statorsegment 110 mit einer Länge größer als 240 mm verbunden. Die Verbindung der einzelnen Stapel oder Module erfolgt beispielsweise durch reaktive Klebstoffe wie Cyanacrylate oder mittels Epoxidharzen, die mittels Induktion oder Prozesswärme ausgehärtet werden. Auch neue wärmeleitfähige Isolierstoffe können bei dem Fügeprozess verwendet werden.

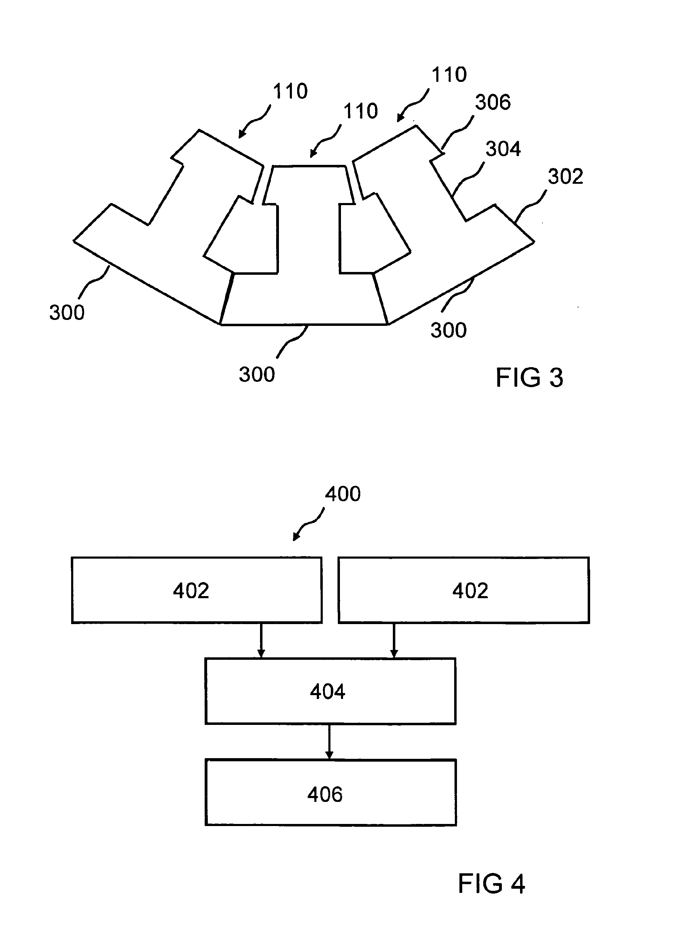

Fig. 3 zeigt einen Querschnitt durch drei benachbart angeordnete Statorsegmente 110 gemäß einem Ausführungsbeispiel der vorliegenden Erfindung. Die Statorsegmente 110 sind senkrecht zu einer Stapelrichtung geschnitten dargestellt. Daher ist eine Kontur je eines Blechs 300 eines Stapels der Statorsegmente 110 dargestellt. Die Bleche 300 weisen je einen Fußbereich 302, einen Schaftbereich 304 sowie einen Kopfbereich 306 auf. Der Fußbereich 302 und der Kopfbereich 306 stehen beidseitig über dem Schaftbereich 304 über. Der Fußbereich 302 weist dabei eine größere Breite als der Kopfbereich 306 auf. Der Fußbereich 302 ist auf einer vom Schaftbereich 304 abgewandten Seite breiter ausgebildet, als auf einer dem Schaftbereich 304 zugewandten Seite. Wenn gemäß diesem Ausführungsbeispiel zwölf Statorsegmente 110 benachbart zueinander angeordnet werden, ergibt sich ein rund geschlossener Stator, der im Fußbereich 302 der Statorsegmente 110 verbunden ist. Im Kopfbereich 306 sind die Statorsegmente 110 durch einen Spalt getrennt. Die Kopfbereiche 306 sind auf einer dem Schaftbereich 304 zugewandten Seite breiter ausgebildet, als auf einer vom Schaftbereich 304 abgewandten Seite. Zwischen den Schaftbereichen 304 ist je ein Hohlraum zur Aufnahme von elektrischen Leitern einer oder mehrere elektrischer Spulen ausgebildet. An den Hohlraum angrenzende Oberflächen der Statorsegmente 110 sind gegen die elektrischen Leiter mittels eines thermisch leitenden und elektrisch isolierenden Isolierstoff elektrisch isoliert.

Vor dem Verbinden der Statorsegmente 110 zu dem Stator werden auf die Schaftbereiche 304 Spulen aufgebracht. Dabei werden elektrisch leitfähige Drähte in höchster Packungsdichte zwischen dem Kopfbereich 306 und dem Fußbereich 302 entlang des Schaftbereichs 304 angeordnet. Die Drähte sind gegen die Statorsegmente 110 und gegeneinander elektrisch isoliert und wärmeleitfähig verbunden.

Um einen verbesserten Wirkungsgrad einer elektrischen Maschine zu erreichen kann ein Füllfaktor des Stators erhöht werden. Unter dem Füllfaktor kann ein Verhältnis von Elektro-Leitermaterial zu magnetisierbarem Material in dem Stator verstanden werden. Ein höherer Füllfaktor kann durch eine verbesserte Spulenqualität erreicht werden. Um die Spulenqualität zu verbessern kann eine Anordnung des Leitermaterials oder der Drähte in den Nuten des Stators verbessert werden. Beispielsweise können die Drähte parallel ausgerichtet und dicht gepackt werden. Dies kann durch ein kontrolliertes Wickeln der Spulen auf die Statorsegmente 110 erfolgen. Die Statorsegmente 110 können anschließend zu dem Stator zusammengefügt werden.

Fig. 4 zeigt ein Ablaufdiagramm eines Verfahrens 400 zur Herstellung eines Statorsegments gemäß einem Ausführungsbeispiel der vorliegenden Erfindung. Das Verfahren weist Schritte des Bereitstellens 402 von Stapeln, einen Schritt des Anordnens 404 sowie einen Schritt des Verbindens 406 auf.

In den Schritten des Bereitstellens 402, 402 werden beispielsweise die in Fig. 1a gezeigten vorgefertigten Stapel 100, 102 bereitgestellt. Es können so viele Stapel wie erforderlich bereitgestellt werden. Im Schritt des Anordnens 404 werden die Stapel in einer Reihe ausgerichtet. Im Schritt des Verbindens 406 werden aneinander angrenzende Flächen der angeordneten Stapel miteinander verbunden. Das Verbinden kann mittels einer Klebeverbindung erfolgen. Dazu kann vor dem Zusammenfügen zweier Stapel ein geeigneter Klebstoff auf eine Endfläche eines der zu verbindenden Stapel oder auf die zu verbindenden Endflächen beider Stapel aufgebracht werden. Anschließend können die zu verbindenden Stapel mittels der in Fig. 2 gezeigten Fertigungsvorrichtung zusammengepresst werden, bis der Klebstoff seine verbindende Wirkung entfaltet hat und die Stapel aneinander fixiert. Durch das Verbinden der Stapel kann ein Statorsegment mit einer Länge von beispielsweise mehr als 100 mm, 200 mm oder mehr als 300 mm hergestellt werden.

Gemäß einem Ausführungsbeispiel werden die jeweiligen Stapel in den Schritten des Bereitstellens 402 hergestellt. Zum Herstellen eines Stapels werden die Bleche des Stapels aufeinandergestapelt und mittels einer mechanischen Verbindungstechnik fest miteinander verbunden.

Die gezeigten Ausführungsbeispiele sind nur beispielhaft gewählt und können miteinander kombiniert werden.

### Bezugszeichenliste

- 100: Stapel
- 102: weiterer Stapel
- 104: Stapelrichtung
- 110: Statorsegment
- 108: Klebefuge
- 200: Fertigungsvorrichtung
- 300: Blech
- 302: Fußbereich
- 304: Schaftbereich
- 306: Kopfbereich
- 400: Verfahren
- 402: Schritt des Bereitstellens
- 404: Schritt des Anordnens
- 406: Schritt des Verbindens

## Patentansprüche

1. Statorsegment (110) für eine elektrische Maschine, wobei das Statorsegment (110) die folgenden Merkmale aufweist:
einen ersten Stapel (100), mit einer ersten Bodenfläche und einer ersten Deckfläche, wobei der erste Stapel aus einer ersten Anzahl von in einer Stapelrichtung (104) aufeinandergestapelten Blechen (300) gebildet ist; und
einen zweiten Stapel (102), mit einer zweiten Bodenfläche und einer zweiten Deckfläche, wobei der zweite Stapel aus einer zweiten Anzahl von in der Stapelrichtung (104) aufeinandergestapelten Blechen (300) gebildet ist, und
wobei die zweite Bodenfläche an der ersten Deckfläche anliegt und mit der ersten Deckfläche verklebt ist.

2. Statorsegment (110) gemäß Anspruch 1, bei dem die Bleche (300) des ersten Stapels (100) sowie die Bleche (300) des zweiten Stapels (102) mechanisch miteinander verbunden sind.

3. Statorsegment (110) gemäß einem der vorhergehenden Ansprüche, bei dem die Bleche (300) des ersten Stapels (100) und die Bleche (300) des zweiten Stapels (102) in der Stapelrichtung (104) deckungsgleich aneinander ausgerichtet sind.

4. Statorsegment (110) gemäß einem der vorhergehenden Ansprüche, bei dem die Bleche (300) eine Doppel-T Kontur mit einem Fußbereich (302), einem Schaftbereich (304) und einem Kopfbereich (306) aufweisen, wobei der Fußbereich (302) den Schaftbereich (304) weiter überragt, als der Kopfbereich (306).

5. Statorsegment (110) gemäß einem der vorhergehenden Ansprüche, wobei das Statorsegment (110) zumindest teilweise von einem wärmeleitfähigen Isolierstoff überzogen und/oder durchdrungen ist, der dazu ausgebildet ist, die Bleche (300) elektrisch zu isolieren.

6. Statorsegment (110) gemäß einem der vorhergehenden Ansprüche, bei dem die erste Anzahl von der zweiten Anzahl unterschiedlich ist.

7. Statorsegment (110) gemäß einem der vorhergehenden Ansprüche, mit zumindest einem weiteren Stapel, mit einer weiteren Bodenfläche und einer weiteren Deckfläche, der aus einer weiteren Anzahl von in der Stapelrichtung (104) aufeinandergestapelten Blechen (300) gebildet ist, wobei die weitere Bodenfläche an der zweiten Deckfläche des zweiten Stapels (102) anliegt und mit der zweiten Deckfläche des zweiten Stapels (102) verklebt ist.

8. Stator für eine elektrische Maschine, mit einer Mehrzahl von Statorsegmenten (110) gemäß einem der Ansprüche 1 bis 7, die benachbart zueinander angeordnet sind und miteinander verbunden sind.

9. Verfahren (400) zur Herstellung eines Statorsegments (110) für eine elektrische Maschine, wobei das Verfahren die folgenden Schritte umfasst:
Bereitstellen (402) eines Stapels (100), mit einer Bodenfläche und einer Deckfläche, wobei der Stapel aus einer Anzahl von in einer Stapelrichtung (104) aufeinandergestapelten Blechen (300) gebildet ist;
Bereitstellen (402) zumindest eines weiteren Stapels (102), mit einer weiteren Bodenfläche und einer weiteren Deckfläche, wobei der weitere Stapel aus einer weiteren Anzahl von in einer Stapelrichtung (104) aufeinandergestapelten Blechen (300) gebildet ist;
Anordnen (404) der weiteren Bodenfläche des zumindest einen weiteren Stapels (102) an der Deckfläche des Stapels (100); und
Verbinden (406) der weiteren Bodenfläche des zumindest einen weiteren Stapels (102) mit der Deckfläche des Stapels (100).

10. Verfahren (400) gemäß Anspruch 9, bei dem im Schritt des Verbindens (406) die weitere Bodenfläche des zumindest einen weiteren Stapels (102) mit der Deckfläche des Stapels (100) verklebt wird.
